# FASCICULE DE BREVET EUROPEEN

(11) **EP 2 102 062 B1**
(45) Date de publication et mention de la délivrance du brevet: **04.01.2012**
(21) Numéro de dépôt: 07858692.2
(22) Date de dépôt: 13.11.2007
(51) Int. Cl.: B64D 33/02, B64D 15/16, F02C 7/045, G10K 11/172

(54) **BORD D'ATTAQUE D'AERONEF**
EINTRITTSKANTE EINES FLUGZEUGES
AIRCRAFT LEADING EDGE

(30) Priorité: 16.11.2006 FR 0654929
(43) Date de publication de la demande: 23.09.2009
(73) Titulaire: Airbus Opérations SAS, 31060 Toulouse (FR)
(72) Inventeur: GANTIE, Fabrice, 31000 Toulouse (FR); PORTE, Alain, 31770 Colomiers (FR)
(74) Mandataire: Fantin, Laurent
(86) Numéro de dépôt international: PCT/FR2007/052334
(87) Numéro de publication internationale: WO 2008/059169

(56) Documents cités:
- EP-A- 0 067 506
- EP-A- 1 495 963
- EP-A- 1 715 160
- EP-A1- 1 232 944
- FR-A- 2 887 519
- US-A- 4 759 513
- US-A1- 2002 179 773

## Description

La présente invention se rapporte à un bord d'attaque d'aéronef, et plus particulièrement à une entrée d'air d'une nacelle d'aéronef incorporant un revêtements pour le traitement acoustique ainsi qu'un système permettant d'éviter la formation et/ou l'accumulation de glace et/ou de givre.

Un ensemble propulsif d'aéronef comprend une nacelle dans laquelle est disposée de manière sensiblement concentrique une motorisation entraînant une soufflante montée sur son arbre.

La nacelle comprend une paroi intérieure délimitant un conduit avec une entrée d'air à l'avant, une première partie du flux d'air entrant, appelée flux primaire, traversant la motorisation pour participer à la combustion, la seconde partie du flux d'air, appelée flux secondaire, étant entrainée par la soufflante et s'écoulant dans un conduit annulaire délimité par la paroi intérieure de la nacelle et la paroi extérieure de la motorisation.

Le bruit émis par l'ensemble propulsif se compose d'une part du bruit de jet, produit à l'extérieur des conduits suite au mélange des différents écoulements d'air et gaz brûlés, et d'autre part, du bruit généré par les parties internes, dit bruit interne, produit par la soufflante, les compresseurs, les turbines et la combustion qui se propage à l'intérieur des conduits.

Pour limiter l'impact des nuisances sonores à proximité des aéroports, les normes internationales sont de plus en plus contraignantes en matière d'émissions sonores.

Des techniques ont été développées pour réduire le bruit interne, notamment en disposant, au niveau des parois des conduits, des revêtements visant à absorber une partie de l'énergie sonore, notamment en utilisant le principe des résonateurs d'Helmholtz. De manière connue, ce revêtement acoustique, également appelé panneau acoustique, comprend de l'extérieur vers l'intérieur une couche poreuse acoustiquement résistive, une structure alvéolaire et une couche réflectrice, comme décrit notamment dans le document US 4.759.513.

Par couche, on entend une ou plusieurs couches de même nature ou non.

La couche poreuse acoustiquement résistive est une structure poreuse ayant un rôle dissipatif, transformant partiellement l'énergie acoustique de l'onde sonore la traversant en chaleur, Elle comprend des zones dites ouvertes susceptibles de laisser passer les ondes acoustiques et d'autres dites fermées ou pleines ne laissant pas passer les ondes sonores mais destinées à assurer la résistance mécanique de ladite couche. Cette couche acoustiquement résistive se caractérise notamment par un taux de surface ouverte qui varie essentiellement en fonction du moteur, des composants constituant ladite couche.

Pour l'instant, en raison de différentes contraintes, par exemple de mise en forme ou de compatibilité avec d'autres équipements, les revêtements sont notamment prévus au niveau de la paroi intérieure de la nacelle sur une zone limitée distante de l'entrée d'air et de la sortie d'air.

Pour augmenter l'efficacité du traitement acoustique, une solution consiste à augmenter les surfaces recouvertes par le revêtement acoustique. Toutefois, au niveau de l'entrée d'air ou de la lèvre de la nacelle, la mise en place d'un revêtement acoustique n'est pour l'instant pas possible notamment car ledit revêtement n'est pas compatible avec les systèmes permettant d'éviter la formation et/ou l'accumulation de glace et/ou de givre qui sont nécessaires dans ces zones.

Ces systèmes sont divisés en deux grandes familles, les premiers appelés systèmes anti-givrants permettant de limiter la formation de la glace et/ou du givre, les seconds appelés systèmes dégivrants limitant l'accumulation de la glace et/ou du givre et agissant une fois la glace et/ou le givre formé. Pour la suite de la description, on entend par système de traitement du givre, un système anti-givrant ou un système dégivrant.

Pour le traitement anti-givre, une solution consiste à traiter l'aéronef au sol en utilisant un gaz ou un liquide déposé sur les surfaces à traiter. Même si ces traitements sont efficaces, notamment au moment du décollage, ils ont une durée limitée. Or, il est nécessaire que des systèmes de traitement du givre soient embarqués sur l'aéronef car du givre (ou de la glace) peut se former au niveau de la surface aérodynamique de l'aéronef, et plus particulièrement au niveau des bords d'attaque de la voilure, de la nacelle, de l'empennage ou autre, lorsque l'aéronef traverse certaines conditions météorotogiques,

Un premier système de traitement du givre consiste à utiliser des résistances électriques en matériau conducteur recouvert d'un isolant pour chauffer par effet Joule la surface à traiter. Ce type de systèmes ne donne pas satisfaction car il est relativement fragile et susceptible d'être endommagé par des chocs d'oiseaux, de grêle ou accidentels lors de la maintenance. Dans les zones endommagées, le système de traitement du givre peut ne plus fonctionner rendant possible la formation et l'accumulation de la glace ou du givre. Par ailleurs, ce type de systèmes de traitement du givre a une consommation électrique relativement importante si bien qu'il peut être nécessaire pour certaines configurations d'aéronef de prévoir une alimentation électrique supplémentaire. Enfin, il n'est pas compatible avec les revêtements pour le traitement acoustique car sa présence en surface altère généralement les performances du traitement acoustique.

Un autre système de traitement du givre consiste à utiliser de l'air chaud prélevé au niveau du moteur et refoulé au niveau de la paroi interne des bords d'attaque. Ce système performant est difficilement compatible avec le revêtement de traitement acoustique dans la mesure où ce dernier est relativement épais et constitué d'alvéoles contenant de l'air agissant comme un isolant. Par ailleurs, l'utilisation d'un système à air chaud peut s'avérer problématique dans certaines conditions de vol, notamment au moment de la décélération avant l'atterrissage, qui sont généralement les moments les plus propices à l'apparition du givre, dans la mesure où la production d'air chaud par le moteur est réduite durant ces phases.

Enfin, ce type de systèmes de traitement du givre a également l'inconvénient de générer des températures et des variations de pression importantes.

Un autre système de traitement du givre décrit dans le document EP 0067506 consiste à utiliser un émetteur produisant un champ électromagnétique.

La présente invention vise à pallier aux inconvénients de l'art antérieur en proposant un bord d'attaque et plus particulièrement une entrée d'air de nacelle, incorporant un revêtement pour le traitement acoustique ainsi qu'un système pour le traitement du givre compatibles permettant d'optimiser le fonctionnement de chacun. Selon un autre objectif, ce nouvel agencement doit permettre de faciliter la maintenance ou de réduire les interventions afin de réduire les temps d'immobilisation au sol.

A cet effet, l'invention a pour objet un bord d'attaque d'aéronef caractérisé en ce qu'il comprend d'une part un revêtement pour le traitement acoustique comportant de l'extérieur vers l'intérieur une couche acoustiquement résistive possédant un taux déterminé de surface ouverte, au moins une structure alvéolaire et une couche réflectrice, et d'autre part, un système de traitement du givre de type ponctuel sous la forme d'au moins un émetteur de vibrations disposé dans un logement débouchant au niveau de la surface aérodynamique.

Ce système de traitement du givre ponctuel ne s'étend pas sur toute la surface à traiter si bien que son influence sur le fonctionnement du traitement acoustique est réduite.

De préférence, la surface de l'émetteur de vibrations interférant avec la couche acoustiquement résistive est relativement faible de manière à assurer la continuité du caractère homogène du taux de surface ouverte de la couche acoustiquement résistive.

Ainsi, le système de traitement du givre est compatible avec la couche résistive dans la mesure où il n'altère pas son fonctionnement global, la ou les zones d'ombres correspondant à la présence du ou des systèmes de traitement du givre étant réduites et susceptibles d'engendrer qu'une faible variation du taux de surface ouverte au niveau du revêtement de traitement acoustique.

De préférence, le ou les émetteurs de vibrations sont en contact avec la surface à traiter, sur laquelle est susceptible de se former la glace ou le givre. Le fait que l'émetteur de vibrations est disposé dans un logement débouchant au niveau de la surface aérodynamique permet de faciliter la maintenance du système de traitement du givre.

D'autres caractéristiques et avantages ressortiront de la description qui va suivre de l'invention, description donnée à titre d'exemple uniquement, en regard des dessins annexés sur lesquels :
- la figure 1 est une vue en perspective d'un ensemble propulsif d'un aéronef,
- la figure 2 est une coupe longitudinale illustrant une entrée d'air d'une nacelle selon l'invention,
- la figure 3 est une coupe transversale illustrant une entrée d'air d'une nacelle comprenant un système de traitement du givre de type ponctuel,
- la figure 4 est une coupe illustrant en détails
- la figure 5 une coupe illustrant en défaits l'installation d'un émetteur de vibration, l'invention,
- la figure 6 est une coupe longitudinale illustrant l'implantation des émetteurs de vibrations au niveau d'une entrée d'air, et
- la figure 7 est une coupe transversale illustrant l'implantation des émetteurs de vibrations au niveau de l'entrée d'air.

La présente invention est maintenant décrite appliquée à une entrée d'air d'un ensemble propulsif d'un aéronef. Cependant, elle peut s'appliquer au niveau des différents bords d'attaque d'un aéronef au niveau desquels un traitement acoustique et un traitement du givre sont opérés, par exemple le bord d'attaque des ailes.

Pour la suite de la description, on entend par givre aussi bien le givre que la glace, de toutes natures, de toutes structures et de toutes les épaisseurs.

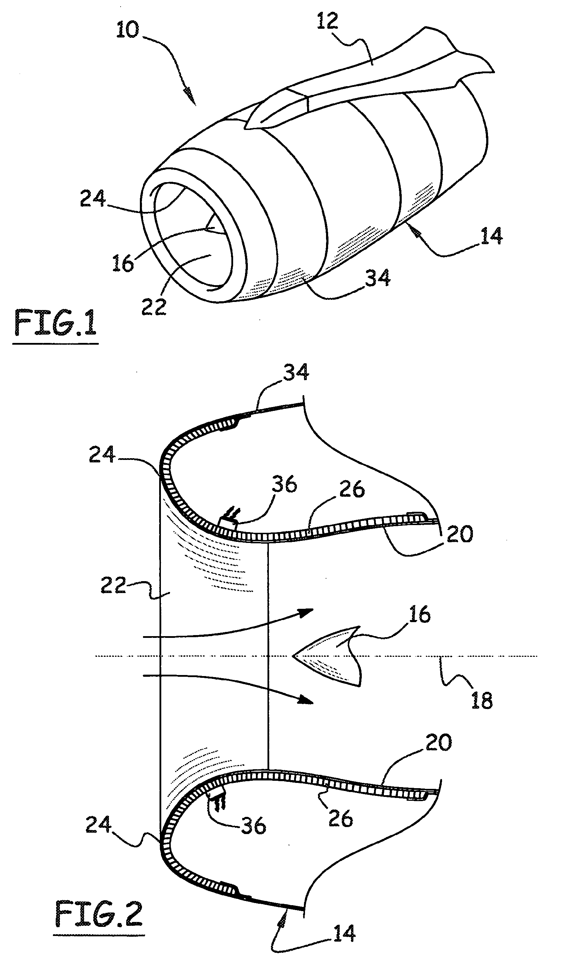

Sur la figure 1, on a représenté un ensemble propulsif 10 d'un aéronef relié sous la voilure par l'intermédiaire d'un mât 12. Toutefois, cet ensemble propulsif pourrait être relié à d'autres zones de l'aéronef.

Cet ensemble propulsif comprend une nacelle 14 dans laquelle est disposée de manière sensiblement concentrique une motorisation entraînant une soufflante montée sur son arbre 16. L'axe longitudinal de la nacelle est référencé 18.

La nacelle 14 comprend une paroi intérieure 20 délimitant un conduit avec une entrée d'air 22 à l'avant, une première partie du flux d'air entrant, appelée flux primaire, traversant la motorisation pour participer à la combustion, la seconde partie du flux d'air, appelée flux secondaire, étant entrainée par la soufflante et s'écoulant dans un conduit annulaire délimité par la paroi intérieure 20 de la nacelle et la paroi extérieure de la motorisation.

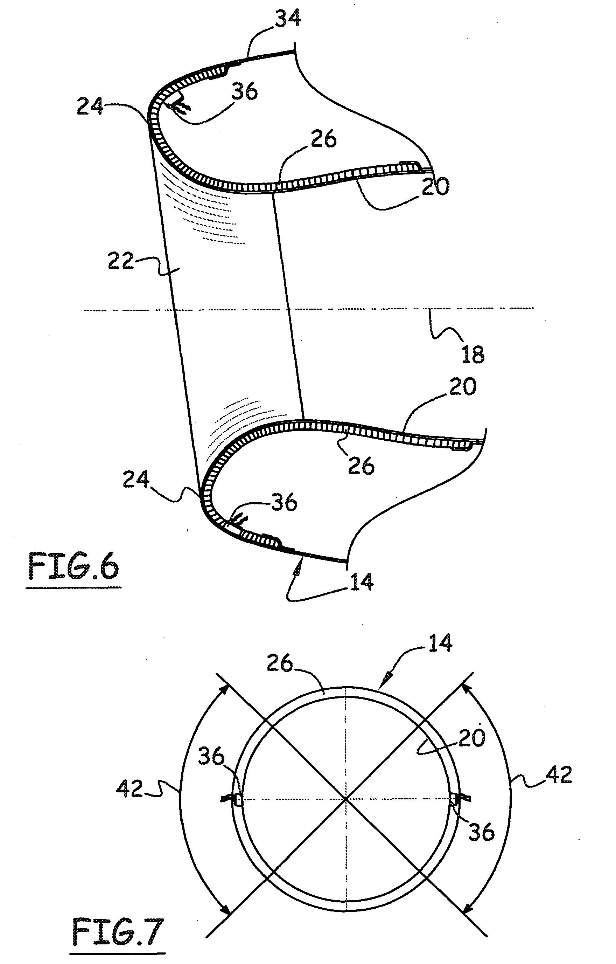

La partie sommitale 24 de l'entrée d'air 22 décrit une forme sensiblement circulaire qui s'étend dans un plan qui peut être sensiblement perpendiculaire à l'axe longitudinal 18, comme illustré sur la figure 2, ou non perpendiculaire, avec la partie sommitale située à 12h légèrement avancée, comme illustré sur la figure 6. Toutefois, d'autres formes d'entrée d'air peuvent être envisagées.

Pour la suite de la description, on entend par surface aérodynamique l'enveloppe de l'aéronef en contact avec le flux aérodynamique.

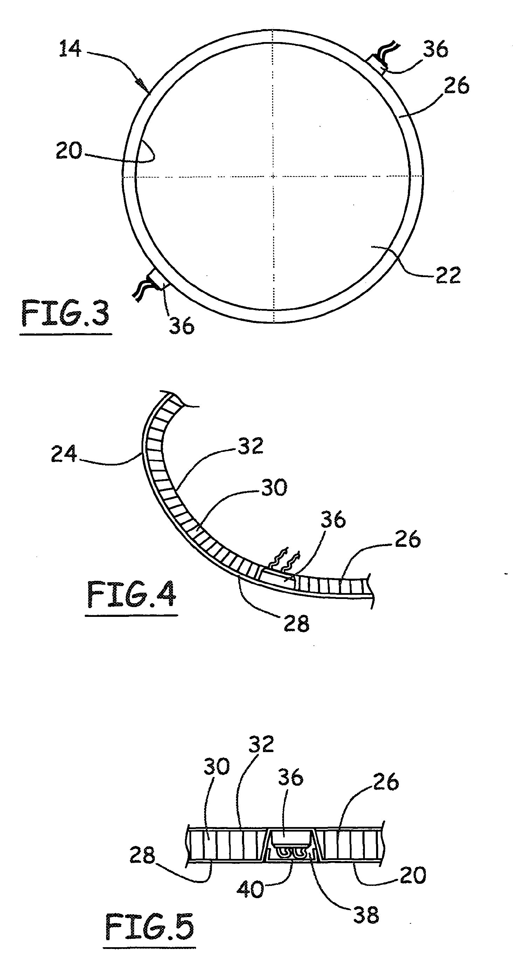

Pour limiter l'impact des nuisances, un revêtement 26 visant à absorber une partie de l'énergie sonore, notamment en utilisant le principe des résonateurs d'Helmholtz est prévu notamment au niveau des surfaces aérodynamiques. De manière connue, ce revêtement acoustique, également appelé panneau acoustique, comprend de l'extérieur vers l'intérieur une couche acoustiquement résistive 28, au moins une structure alvéolaire 30 et une couche réflectrice 32, comme illustré sur les figures 4 et 5.

Par couche, on entend une ou plusieurs couches de même nature ou non.

La couche acoustiquement résistive 28 est une structure poreuse ayant un rôle dissipatif, transformant partiellement l'énergie acoustique de l'onde sonore la traversant en chaleur. Cette couche 28 peut comprendre des zones dites ouvertes susceptibles de laisser passer les ondes acoustiques et d'autres dites fermées ou pleines ne laissant pas passer les ondes acoustiques mais destinées à assurer la résistance mécanique de ladite couche. Cette couche acoustiquement résistive se caractérise notamment par un taux de surface ouverte qui varie essentiellement en fonction du moteur, des composants constituant ladite couche.

Ces différentes couches ne sont pas plus décrites car elles sont connues de l'homme du métier.

Selon l'invention, pour réduire encore les nuisances sonores, l'entrée d'air 22 comprend un revêtement acoustique 26 sur au moins une partie de la surface aérodynamique.

Selon un mode de réalisation, ce revêtement acoustique 26 s'étend de la paroi intérieure 20 de la nacelle jusqu'à la partie sommitale 24 de l'entrée d'air sur toute la périphérie de l'entrée d'air. De préférence, comme illustré sur les figures 2 et 6, le revêtement acoustique 26 s'étend au-delà de la partie sommitale 24 de l'entrée d'air, et recouvre une partie de la surface extérieure 34 de la nacelle,

La mise en place du revêtement acoustique ou sa structure ne sont pas plus détaillées car certaines sont connues de l'homme du métier et d'autres font l'objet de demandes de brevet au nom du demandeur de la présente demande. Pour limiter la formation du givre ou éviter son accumulation, au moins un système de traitement du givre est prévu au niveau de l'entrée d'air 22.

Pour la suite de la description, on entend par système de traitement du givre, un système anti-givrant ou un système dégivrant.

Pour pouvoir rendre le traitement acoustique et le traitement du givre compatibles, et que le fonctionnement de l'un ne nuise pas au fonctionnement de l'autre, le système de traitement du givre est de type ponctuel.

En étant de type ponctuel, le système de traitement du givre n'interfère que sur une surface réduite avec la couche acoustiquement résistive 28 du traitement acoustique.

Par de type ponctuel, on entend une action locale dont la vitesse de propagation et/ou la propagation au niveau de la surface à traiter sont importantes, a contrario de l'effet d'un système de traitement utilisant de l'air chaud ou des résistances électriques dont l'action est surfacique ou dont la propagation ou la vitesses de propagation est réduite.

Le système de traitement du givre de type ponctuel comprend au moins un émetteur 36 de vibrations.

Selon une autre caractéristique de l'invention, la surface du ou des systèmes de traitement du givre interférant avec la couche acoustiquement résistive est réduite, afin que la surface du revêtement acoustique impactée par le système de traitement du givre de type ponctuel soit inférieure à 10%. La surface de l'entrée d'air s'étend à l'intérieur du conduit de la nacelle sur une longueur de l'ordre de 1 à 2 m.

A titre d'exemple, une entrée d'air ayant un diamètre de 3m comporte six émetteurs de vibrations.

Selon les variantes, l'émetteur 36 de vibrations peut avoir différents mode de fonctionnement. Ainsi, selon un premier mode de fonctionnement, l'émetteur 36 de vibrations peut émettre des ondes dont la fréquence varie de manière à balayer une plage donnée de fréquences afin d'entrer en résonance avec toutes tailles et/ou toutes structures de glace ou de givre. Cette variante a pour avantage de briser la glace en éléments de tailles réduites ne risquant pas d'endommager la motorisation lorsqu'ils sont ingérés par cette dernière. Néanmoins, il convient de ne pas maintenir pendant une durée importante une fréquence correspondant **à** la fréquence de résonance d'un élément constitutif de l'aéronef, tel que par exemple le revêtement acoustique, afin de ne pas risquer d'endommager ledit élément.

Selon un autre mode de fonctionnement, l'émetteur de vibrations peut transmettre une ou plusieurs ondes d'amplitudes importantes afin de provoquer un choc susceptible de casser la glace, Pour pouvoir utiliser ce principe de fonctionnement, la couche de glace ou de givre doit être relativement épaissie. Par conséquent, les fragments de glace ou de givre peuvent être de tailles relativement importantes. Aussi, on utilisera ce mode de fonctionnement pour les émetteurs disposés sur la surface extérieure 34 de la nacelle afin que les fragments produits ne soient pas ingérés par la motorisation.

L'émetteur 36 est en contact avec la surface à traiter de l'entrée d'air, celle en contact avec le flux d'air aérodynamique sur laquelle est susceptible de se former le givre, comme illustré sur les figures 4 et 5.

Cette configuration permet d'éviter l'atténuation des ondes en traversant le revêtement acoustique. Par conséquent, il est alors possible de réduire l'amplitude des vibrations ou de réduire le nombre d'émetteurs 36 de vibrations au niveau de l'entrée d'air. De plus, cette configuration permet de limiter les risques d'endommagement du revêtement acoustique.

Selon une configuration illustrée sur la figure 4, l'émetteur est en contact avec la face interne de la paroi formant la surface aérodynamique de l'entrée d'air à traiter.

Selon une caractéristique de l'invention, l'émetteur 36 de vibrations est disposé dans un logement 38 (ou cavité) débouchant au niveau de la surface aérodynamique, comme illustré sur la figure 5. Cette configuration permet de faciliter la maintenance et de réduire les temps d'immobilisation de l'aéronef, l'émetteur 36 de vibrations étant accessible depuis l'extérieur. Avantageusement, le logement 38 comprend des moyens pour l'obturer, par exemple une trappe 40, pour assurer la continuité de la surface aérodynamique et réduire les perturbations au niveau de l'écoulement du flux d'air dans l'environnement de ladite surface aérodynamique.

Selon un mode de réalisation illustré sur la figure 5, la surface aérodynamique, notamment la couche poreuse acoustiquement résistive 28 comprend une forme en creux susceptible de former un logement 38. L'émetteur 36 est alors disposé dans le logement 38 contre la face extérieure de la surface aérodynamique. Une trappe 40 permettant de refermer le logement 38 autorise l'accès à l'émetteur 36.

Le système de traitement du givre de type ponctuel peut être associé à d'autres systèmes de traitement du givre, notamment ceux permettant d'éviter la formation du givre tels que des résistances électriques.

Ainsi, les émetteurs de vibrations sont disposés au niveau de la surface extérieure 34 de la nacelle, comme illustré sur la figure 6, et/ou à l'intérieur de la nacelle au niveau des secteurs angulaires 42 s'étendant de 2h à 4h approximativement et de 8h à 10h approximativement.

Ainsi, les émetteurs de vibrations qui ont une consommation énergétique relativement faible sont disposés au niveau de la surface extérieure car les risques sont limités qu'un fragment de glace de cette zone soit ingéré par la motorisation. De même, la formation de glace ou de givre est limitée à l'intérieur de la nacelle au niveau des secteurs angulaires référencés 42 si bien qu'un émetteur de vibrations par batayole de fréquence peut être utilisé.

Du fait que le givre ou la glace a tendance à se former de manière plus importante dans les zones prévues à l'intérieur de la nacelle entre les secteurs angulaires 42 et pour limiter les risques d'ingestion par la motorisation de gros fragments, on utilisera dans ces zones un système de traitement du givre de type électrique à effet Joule dont le fonctionnement est plus sûr et qui empêche la formation du givre ou de la glace, même si ce type de systèmes de traitement du givre a une consommation énergétique plus élevée.

Cette association de différents systèmes de traitement du givre permet d'optimiser le traitement en limitant la consommation énergétique, tout en ayant un fonctionnement sûr et efficace.

Bien entendu, l'invention n'est évidemment pas limitée au mode de réalisation représenté et décrit ci-dessus, mais en couvre au contraire toutes les variantes couvertes par le texte par le texte des revendications.

## Revendications

1. Bord d'attaque d'aéronef, tel que par exemple une entrée d'air (22) d'une nacelle (14) d'un ensemble propulsif (10), comprenant un revêtement (26) pour le traitement acoustique comportant de l'extérieur vers l'intérieur une couche poreuse acoustiquement résistive (28) possédant un taux déterminé de surface ouverte, au moins une structure alvéolaire (30) et une couche réflectrice (32), ledit revêtement (26) intégrant un système de traitement du givre comprenant au moins un émetteur (36) de vibrations, **caractérisé en ce qu'**au moins un émetteur de vibrations (36) est disposé dans un logement (38) débouchant au niveau de la surface aérodynamique.

2. Bord d'attaque selon la revendication 1, **caractérisé en ce que** le ou les émetteurs de vibrations (36) sont en contact avec la surface à traiter.

3. Bord d'attaque selon la revendication 1 ou 2, **caractérisé en ce que** le logement (38) comprend des moyens pour l'obturer, par exemple une trappe (40), pour assurer la continuité de la surface aérodynamique et réduire les perturbations au niveau de l'écoulement du flux d'air dans l'environnement de ladite surface aérodynamique.

4. Bord d'attaque selon l'une quelconque des revendications 1 à 3, **caractérisé en ce que** la surface du ou des logement(s) prévu(s) pour le ou les système(s) de traitement du givre interférant avec la couche acoustiquement résistive est inférieure à 10% de la surface du revêtement acoustique.

5. Entrée d'air (22) d'une nacelle (14) d'un ensemble propulsif (10) d'aéronef comprenant un bord d'attaque selon une des revendications 1 à 4.

## Claims

1. Aircraft leading edge, such as, for example, an air intake (22) of a nacelle (14) of a propulsion unit (10), comprising a coating (26) for the acoustic treatment that comprises - from the outside to the inside - an acoustically resistive porous layer (28) that has a determined open surface ratio, at least one alveolar structure (30), and a reflective layer (32), whereby said coating (26) integrates a frost treatment system comprising at least one vibration emitter (36), **characterized in that** at least one vibration emitter (36) is arranged in a housing (38) that empties out at the aerodynamic surface.

2. Leading edge according to claim 1, wherein the vibration emitter(s) (36) is/are in contact with the surface to be treated.

3. Leading edge according to claim 1 to 2, wherein the housing (38) comprises means for sealing it, for example a flap (40), to ensure the continuity of the aerodynamic surface and to reduce the disruption of the flow of air into the environment of said aerodynamic surface.

4. Leading edge according to claim 1 to 3, wherein the surface area of the housing(s) provided for the frost treatment system(s) interfering with the acoustically resistive layer is less than 10% of the surface area of the acoustic coating.

5. Air intake (22) of a nacelle (14) of an aircraft propulsion unit (10) that comprises a leading edge according to claim 1 to 4.

## Patentansprüche

1. Eintrittskante eines Flugzeugs, wie zum Beispiel ein Lufteinlass (22) einer Gondel (14) einer Antriebseinheit (10), umfassend eine Beschichtung (26) für den Schallschutz, die - von außen nach innen - eine schallwiderstandsfähige poröse Schicht (28), welche einen bestimmten Anteil an offener Fläche aufweist, wenigstens eine Wabenstruktur (30) sowie eine reflektierende Schicht (32) umfasst, wobei die Beschichtung (26) ein Eisbehandlungssystem beinhaltet, das wenigstens einen Schwingungssender (36) umfasst, **dadurch gekennzeichnet, dass** wenigstens ein Schwingungssender (36) in einer Aufnahme (38), welche im Bereich der aerodynamischen Fläche ausmündet, angeordnet ist.

2. Eintrittskante nach Anspruch 1, **dadurch gekennzeichnet, dass** der oder die Schwingungssender (36) mit der zu behandelnden Fläche in Kontakt sind.

3. Eintrittskante nach Anspruch 1 oder 2, **dadurch gekennzeichnet, dass** die Aufnahme (38) Mittel zu ihrem Verschließen, beispielsweise eine Klappe (40) umfasst, um den stetigen Verlauf der aerodynamischen Fläche zu gewährleisten und um die Störungen im Bereich der Strömung des Luftstroms in der Umgebung der aerodynamischen Fläche zu reduzieren.

4. Eintrittskante nach einem der Ansprüche 1 bis 3, **dadurch gekennzeichnet, dass** die Fläche der für das oder die Eisbehandlungssystem(e) vorgesehenen Aufnahme(n), welche sich mit der schallwiderstandsfähigen Schicht überschneidet, weniger als 10 % der Fläche der schalldämpfenden Beschichtung beträgt.

5. Lufteinlass (22) einer Gondel (14) einer Antriebseinheit (10) eines Flugzeugs, der eine Eintrittskante nach einem der Ansprüche 1 bis 4 umfasst.
